# EUROPÄISCHE PATENTSCHRIFT

(11) **EP 0 400 308 B1**
(45) Veröffentlichungstag und Bekanntmachung des Hinweises auf die Patenterteilung: **23.06.1993**
(21) Anmeldenummer: 90106996.3
(22) Anmeldetag: 11.04.1990
(51) Int. Cl.: B29C 45/00

(54) **Verfahren zum Herstellen von hohlgespritzten Formkörpern aus Kunststoff und Vorrichtung zur Durchführung des Verfahrens**
Method for producing hollow injection mouldings from plastic and apparatus for executing the method
Procédé pour la fabrication de corps creux moulés par injection en plastique et dispositif pour la réalisation du procédé

(30) Priorität: 29.05.1989 DE 3917366
(43) Veröffentlichungstag der Anmeldung: 05.12.1990
(73) Patentinhaber: SCHADE KG, D-58840 Plettenberg (DE)
(72) Erfinder: Strunk, Harald, D-5970 Plettenberg (DE); Göhr, Kurt, D-5952 Attendorn-Windhausen (DE)
(74) Vertreter: Gossel, Hans K., Dipl.-Ing.

(56) Entgegenhaltungen:
- GB-A- 2 202 181

## Beschreibung

Die Erfindung betrifft ein Verfahren zum Herstellen von hohlgespritzten Formkörpern aus Kunststoff und eine Vorrichtung zur Durchführung des erfindungsgemäßen Verfahrens gemäß dem Oberbegriff des Anspruchs 1 bzw. 9.

Hohlspritzverfahren zur Herstellung von Kunststofformkörpern zur Anwendung im Automobilbau, z.B. für Mittelkonsolen, Verkleidungsteile, Armlehnen o. dgl., sind in unterschiedlicher Art bekannt. Bei einem vorbekannten Verfahren nach der DE-OS 25 01 314 wird das Gas nach dem Ausfüllen der Form mit einer Kunststoffschmelze mittels einer Injektionsdüse in die Kunststoffschmelze eingebracht und bildet ein Druckkissen. Nach einer ausreichenden Abkühlzeit wird die Injektionsdüse von der Form getrennt und damit der Formkörperhohlraum zur Atmosphäre freigegeben. Nachdem das Gas aus dem Formkörperhohlraum ausgeströmt ist und ein Druckausgleich mit der Atmosphäre stattgefunden hat, wird abschließend die Form geöffnet und der fertige Formkörper der Form entnommen.

Bei dem bekannten Verfahren wird die Ausformung des Formkörpers durch ein während des gesamten Verfahrensablaufes durch das Gas gebildetes, stehendes Druckkissen erreicht. Da durch ein solches statisches Druckkissen das Gas zu einer Abkühlung des Formhohlkörpers nicht beitragen kann, ist die Abkühlzeit pro Spritzzyklus bei diesem Verfahren relativ lang und damit die Leistung einer solchen Anlage entsprechend gering. Ein besonders gravierender Nachteil ergibt sich bei diesem Verfahren außerdem stets dann, wenn bedingt durch die Konstruktion der Formkörperteile in dem Innenquerschnitt der Form "Sacklöcher" vorhanden sind, die sich bei der Befüllung zwangsläufig mit Kunststoffschmelze zusetzen, ohne daß das stehende Gas-Druckkissen zu der gewünschten Hohlausformung des Formkörpers im Bereich der Sackloch-Querschnitte beitragen kann. Dadurch entstehen unkontrollierbare Materialanhäufungen in diesen Querschnittsbereichen, mit der Gefahr der Bildung von Einfallstellen durch unregelmäßige Wandungsdicken des Formkörpers. Ein weiterer Nachteil ergibt sich durch die ungleichmäßige Abkühlung der Formkörperaußenwand durch das angrenzende Formwerkzeug gegenüber der Formkörper-Hohlraumwand durch das stehende Gas-Druckkissen, so daß auch dadurch Verwerfungen und Materialschwundstellen im Formkörper entstehen, die einerseits zu Qualitätseinbußen der fertigen Produkte führen und zum aneren nachträgliche, aufwendige Oberflächenbehandlungen notwendig machen.

Der vorliegenden Erfindung liegt die Aufgabe zugrunde, ein Verfahren der gattungsgemäßen Art so weiterzuentwickeln, daß eine Verringerung der Abkühlzeiten pro Spritzzyklus sowie eine Steigerung der Qualität der hohlgespritzten Formkörper, insbesondere gleichmäßigere Wandungsquerschnitte und eine verbesserte Oberflächengüte der Formkörper erreicht wird. Der Erfindung liegt weiter die Aufgabe zugrunde, eine leistungsfähige Vorrichtung vorzuschlagen, die nach dem erfindungsgemäßen Verfahren arbeitet.

Die auf das Verfahren bezogene Aufgabe wird dadurch gelöst, daß das Gas nach dem Einbringen der Kunststoffschmelze in den Formhohlraum in die Kunststoffschmelze injiziert wird, danach unter Überwindung der Formkörperwandung in eine Überlaufkammer einströmt und von dort in ein Gas-Umlaufsystem gelangt, derart, daß während der Ausformung der Schmelze der sich bildende Formkörperhohlraum bis zur Verfestigung des Formkörpers kontinuierlich mit dem Gas durchströmt wird.

Bei dem erfindungsgemäßen Verfahren wird kurz nach Beendigung des Einspritzvorganges der Kunststoffschmelze in die Formkammer die gesamte Gasmenge, vorzugsweise Stickstoff, zunächst in den Innenraum der Form, d.h. direkt in die Kunststoffschmelze, injiziert. Dabei ist der Druck so groß, daß sich die Schmelze unter Bildung des Formkörper-Hohlraumes an die Innenwände des Hohlraumes der Form anlegt. Infolge des Überdruckes im Formkörperhohlraum zwingt nachströmendes Gas überschüssiges Schmelzmaterial an bestimmten Stellen aus der Form heraus in eine Überlaufkammer. Spätestens beim Eintreten in die Überlaufkammer durchbricht die Gassäule das Schmelzematerial und kann sich in der Überlaufkammer ausdehnen. Dieser Effekt wird ausgenutzt, um das nach wie vor unter hohem Druck stehende Gas in ein Gas-Umlaufsystem einzuleiten, d.h. das aus der Überlaufkammer abströmende Gas wird wieder in das Gas-Zuführungssystem zurückgeleitet und strömt damit zwangsläufig in den Hohlraum des noch in der Form befindlichen Formkörpers zurück, von dem aus es über die Schmelzedurchbrechungen wieder in die Überlaufkammer und erneut in den Umlauf gelangt. Dadurch entsteht eine definiert einstellbare, kontinuierlich umlaufende Druckgasströmung im Formkörperhohlraum mit dem Effekt einer schonenden Innenkühlung des Formkörperhohlraumes und dadurch bedingten erheblich verringerten Spritzzykluszeiten und einer verbesserten Oberflächengüte des Formkörpers, die eine Nachbehandlung von Sichtflächen des Formkörpers entbehrlich macht.

Der Gasstrom wird nach der Erfindung in besonders einfacher Weise durch ein Druckgefälle zwischen der Einströmseite und der Ausströmseite des Gases in die Form bzw. aus der Form erzeugt. Das Druckverhältnis ist zweckmäßig so bemessen, daß ein für die Ausformung des Formkörpers während der Gasströmung hinreichender Innendruck aufrechterhalten wird. Zweckmäßig beträgt der Differenzdruck etwa 2:1. Vorzugsweise beträgt die vor der Einleitung des Gases in den Formhohlraum eingespritzte Kunststoffschmelze zwischen 50 % und 100 % des Fassungsvolumens des Formhohlraumes. Dadurch steht im Formhohlraum stets ausreichend Platz für die Ausdehnung des Gases unter Bildung eines gezielten Überdruckes in dem Formkörperhohlraum zur Verfügung.

Zweckmäßig durchbricht der Gasstrom nach dem Eintreten der Schmelze in die Überlaufkammer infolge des in dem Formkörperhohlraum herrschenden Überdruckes die Schmelzewandung. In vorteilhafter Weiterbildung des erfindungsgemäßen Verfahrens durchströmt das Gas vor dem Einlauf in die Überlaufkammer einen Zwischenkanal wesentlich geringeren Querschnitts als der Überlaufkammer.. Hierdurch wird erreicht, daß das Gas nach dem Durchdringen der Wandungen der Formkörperschmelze, was im allgemeinen im Bereich der Überlaufkammer hinter den Zwischenkanälen erfolgt, nur ein kleiner Teil des Wandungsmaterials der Formkörperschmelze von dem Gasstrom mitgerissen werden kann und in die Überlaufkammer gelangt, von wo aus das mitgeführte Wandungsmaterial bei jedem Öffnen des Formwerkzeuges automatisch entfernt wird. Zweckmäßig wird die Überlaufkammer während des Gasumlaufes gegenüber der Atmosphäre dichtend verschlossen gehalten.

Die erfindungsgemäße Vorrichtung zur Durchführung des Verfahrens nach der Erfindung umfaßt zweckmäßig eine mit einer gegenüber der Atmosphäre abgedichteten Überlaufkammer für das aus dem Formkörperhohlraum ausströmende Gas ausgerüstete Form, einen Verdichter für das Gas, einen Druckbehälter für das verdichtete Gas und einen Druckminderer für das aus der Überlaufkammer ausströmende Gas. In bevorzugter Weiterentwicklung der erfindungsgemäßen Vorrichtung ist die Überlaufkammer an eine Rückführleitung für das abströmende Gas angeschlossen ist, wobei in der Rückführleitung zumindest der Druckminderer und ein angeschlossener Speicherbehälter für das entspannte Gas vorgesehen sind. Zweckmäßig sind in der Rückführleitung zusätzlich ein Filter, zwei Rückschlagventile, eine einen Gasversorger steuernde Druckanzeigeeinrichtung und gegebenenfalls eine dem Druckminderer zugeordnete Rückgewinnungseinrichtung vorgesehen.

Vorzugsweise ist der Druckbehälter über eine Leitung an eine zur Form führende Zuführleitung angeschlossen, wobei die Zuführleitung mit der Rückführleitung über eine Zwischenleitung verbunden ist, in der ein Gasverdichter vorgesehen ist, und wobei der Gasversorger in Strömungsrichtung des Gases vor dem Gasverdichter an die Zwischenleitung angeschlossen ist. Vorteilhaft ist in der Zuführleitung ein Druckstufenregler vorgesehen. Zweckmäßig ist der Zwischenkanal an der Abströmseite des Gases durch einen Schieber o. dgl. verschließbar, welcher nach Beendigung der Schmelzezufuhr in die Form geöffnet wird. Mit Vorteil ist der Schieber in Abhängigkeit von dem Gasdruck in der Form steuerbar.

Das erfindungsgemäße Verfahren und die danach arbeitende Vorrichtung wird anhand einer Prinzipskizze nachstehend näher erläutert.

Die Vorrichtung umfaßt eine zweiteilige Form 10, die aus einem Formoberteil 10a und einem Formunterteil 10b besteht. Der Innenraum ist entsprechend der äußeren Kontur des herzustellenden Formkörpers gestaltet. Die Endform eines fertigen Formkörpers 11 mit einem Formkörperhohlraum 11a ist der Einfachheit halber in die Skizze eingezeichnet worden. Dem Formunterteil 10b ist eine Injektionsdüse 12 für das Gas und eine Düse 12' für die Schmelzezufuhr zugeordnet. An den äußeren Rand des Formkörpers 11 sind im dem dargestellten Ausführungsbeispielen kreisförmige Überlaufkammern 13 geeigneter Anzahl angeschlossen, die jedoch auch jede andere Querschnittsform als die dargestellte haben können. In die Überlaufkammern 13 ist jeweils ein Gas-Entnahmekanal 14 integriert, der durch Bohrungen 31 mit der Überlaufkammer 13 leitend verbunden ist. An den Entnahmekanal 14 ist eine Gas-Rückführleitung 15 angeschlossen.Je nach Ausbildung der Konstruktion kann der Gas-Entnahmekanal 14 auch entfallen und das Druckgas direkt in die Leitung 15 eingeleitet werden.

Die Gas-Injektionsdüse 12 wird von einer Zuführleitung 16 gespeist, durch die das verdichtete Gas in die Form 10 strömt. In die Zuführleitung 16 ist ein Druckstufenregler 17 montiert. Die Rückführleitung 15 ist durch eine Zwischenleitung 18 mit der Zuführleitung 16 verbunden. In der Zwischenleitung 18 liegt ein Gasverdichter 19. An die Zuführleitung 16 ist außerdem über eine Leitung ein Druckbehälter 20 zur Speicherung des verdichteten Gases angeschlossen. In Strömungsrichtung des Gases liegt der Druckbehälter vor dem Druckstufenregler 17. Im Verbindungsbereich der Rückführleitung 15 mit der Zwischenleitung 18 ist über eine Leitung und ein zwischengeschaltetes Ventil 33 ein Gasversorger 21 angeschlossen.

In der Rückführleitung 15 sind in Strömungsrichtung des Gases außerdem hintereinander nachfolgende Funktionsteile geschaltet: ein Filter 22, ein Rückschlagventil 23, ein Druckminderer 24, ein über eine Leitung angechlossener Speicherbehälter 25 für das entspannte Gas, eine den Gasversorger 21 steuernde Druckanzeigeeinrichtung 26 und ein weiteres Rückschlagventil 27. Im Bereich des Druckminderers 24 ist eine parallel geschaltete Rückgewinnungseinrichtung 28 vorgesehen. Die Rückgewinnungseinrichtung kann so in das System integriert und geschaltet sein, daß beim Öffnen des Formwerkzeuges die bis dahin noch in dem Leitungssystem vorhandene Restgasmenge wieder in die Gaszuführung zurückgeleitet und beim folgenden Spritzzyklus nutzbar gemacht wird. In diesem Fall ergibt sich der weitere Vorteil, daß beim Öffnen des Formwerkzeuges die sonst üblichen Gasentspannungsgeräusche gänzlich entfallen.

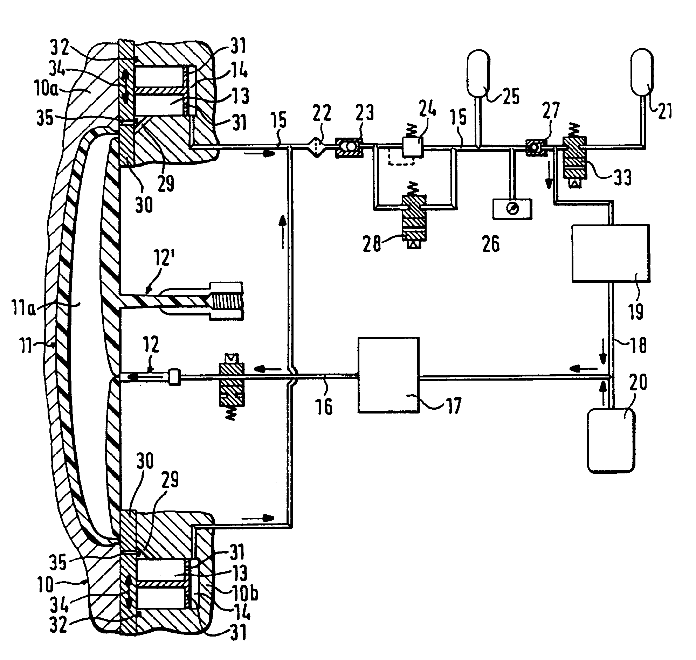

Der Ablauf des erfindungsgemäßen Verfahrens geschieht, indem zunächst in die geschlossene Form 10 über die Spritzdüse 12' so viel Kunststoffschmelze eingespritzt wird, daß ca. 50 bis 100 % des Formwerkzeug-Hohlraumes ausgefüllt sind. Danach wird aus dem Druckbehälter 20 über die Zuführleitung 16 und die Düse 12 Gas, beispielsweise Stickstoff, mit einem Druck von z.B. 200 bar in die Schmelze injiziert. Die Schmelze wird durch den Überdruck gegen die Innenwand der Form gepreßt. Im Bereich von an jeder geeigneten Stelle an der Außenseite des Formkörpers anbringbaren Zwischenkanälen 29, die durch entsprechend dem Doppelpfeil 34 hin- und herschiebbare Schieber 30 bis zur Beendigung der Schmelzezufuhr in die Form mittels der Düse 12′ verschlossen sind, wie dargestellt, wird nach dem Öffnen der Schieber, d.h. nach dem Indeckungbringen der Mündungen der Zwischenkanäle 29 in den Unterwerkzeugen 10b mit den Mündungen von Durchflußkanälen 35 in den Schiebern 30, durch den Gasdruck die Wandung des bis dahin noch nicht selbstragenden Formkörpers durchbrochen, und das Gas strömt unter Mitnahme von Kunststoffrestmengen durch die Kanäle 29, 35 in die Überlaufkammer 13. Der Druckminderer 24 ist so eingestellt, daß das Gas auf einen Druck von beispielsweise 100 bar entspannt wird, sobald es aus der Form in die Überlaufkammer 13 ausgetreten ist. Bei geschlossener Form 10 ist die Überlaufkammer 13 bei 32 gegenüber der Form 10 so abgedichtet, daß das Gas über die Rücklaufleitung 15 unter Zwischenschaltung des Druckminderers 24, des Speicherbehälters 25, des Gasverdichters 19 und des Druckstufenreglers 17 zurück in die Form 10 strömt. Nachdem eine bestimmte Zeit vergangen ist, die ausreicht, den Formkörper 11 hinreichend abzukühlen, wird das Formoberteil 10a vom Formunterteil 10b abgehoben, dadurch der Restdruck im Formteil gegenüber der Atmosphäre freigegeben und der fertige Formkörper 11 der Form entnommen. Die Gasfließrichtungen sind in der Zeichnung durch nicht näher bezeichnete Pfeile markiert.

## Patentansprüche

1. Verfahren zum Herstellen von hohlgespritzten Formkörpern (11) aus Kunststoff, bei dem in den Hohlraum (11a) einer mehrteiligen, geschlossenen Form (10) eine vorbestimmte Menge einer Kunststoffschmelze eingespritzt wird und bei dem die anschließende Ausformung der Schmelze zu dem Formkörper (11) mittels eines unter Druck stehenden Gases erfolgt, wobei das Gas nach dem Einbringen der Kunststoffschmelze in den Hohlraum der zweiteiligen Form (10) in die Kunststoffschmelze injiziert wird, dadurch gekennzeichnet, daß unter Überwindung der Wandungen des Formkörpers (11) das Gas in eine Überlaufkammer (13) einströmt und von dort in ein Gas-Umlaufsystem gelangt, derart, daß während der Ausformung der Schmelze der sich bildende Hohlraum des Formkörpers (11) bis zur Verfestigung des Formkörpers (11) kontinuierlich von dem Gas durchströmt wird.

2. Verfahren nach Anspruch 1, dadurch gekennzeichnet, daß der Gasstrom durch ein Druckgefälle zwischen der Einströmseite und der Ausströmseite des Gases in die Form (10) bzw. aus der Form (10) erzeugt wird.

3. Verfahren nach Anspruch 2, dadurch gekennzeichnet, daß der Differenzdruck des Gases zwischen der Einströmseite und der Ausströmseite so bemessen ist, daß ein für die Ausformung des Formkörpers (11) während der Gasströmung hinreichender Innendruck aufrechterhalten wird.

4. Verfahren nach den Ansprüchen 1 bis 3, dadurch gekennzeichnet, daß der Differenzdruck zwischen der Einströmseite und der Ausströmseite etwa 2:1 beträgt.

5. Verfahren nach den Ansprüchen 1 bis 4, dadurch gekennzeichnet, daß die vor der Einleitung des Gases in den Hohlraum der Form (10) eingespritzte Kunststoffschmelze zwischen 50 % und 100 % des Fassungsvolumens des Hohlraumes der Form (10) beträgt.

6. Verfahren nach den Ansprüchen 1 bis 5, dadurch gekennzeichnet, daß der Gasstrom nach dem Eintreten der Schmelze in die Überlaufkammer (13) infolge des in dem Formkörperhohlraum (11a) herrschenden Überdruckes die Schmelzewandung durchbricht.

7. Verfahren nach Anspruch 6, dadurch gekennzeichnet, daß der Gasstrom vor dem Einlauf in die Überlaufkammer (13) einen Zwischenkanal (29) wesentlich geringeren Querschnitts als der Überlaufkammer durchströmt.

8. Verfahren nach den Ansprüchen 1 bis 7, dadurch gekennzeichnet, daß die Überlaufkammer (13) während des Gasumlaufes gegenüber der Atmosphäre dichtend verschlossen gehalten wird.

9. Vorrichtung zur Durchführung des Verfahrens nach Anspruch 1, mit einer mehrteiligen Form (10), einer Schmelzenzufuhr (12') und einer Injektionsdüse (12) zum Einbringen von Gas in eine Kunststoffschmelze, gekennzeichnet durch eine mit einer gegenüber der Atmosphäre abgedichteten Überlaufkammer (13) für das aus dem Formkörperhohlraum (11a) ausströmende Gas ausgerüstete Form, einen Verdichter (19) für das Gas, einen Druckbehälter (20) für das verdichtete Gas und einen Druckminderer (24) für das aus der Überlaufkammer (13) ausströmende Gas.

10. Vorrichtung nach Anspruch 9, dadurch gekennzeichnet, daß die Überlaufkammer (13) an eine Rückführleitung (15) für das abströmende Gas angeschlossen ist, und daß in der Rückführleitung (15) zumindest der Druckminderer (24) und ein angeschlossener Speicherbehälter (25) für das entspannte Gas vorgesehen sind.

11. Vorrichtung nach den Ansprüchen 9 bis 10, dadurch gekennzeichnet, daß in der Rückführleitung (15) zusätzlich ein Filter (22), zwei Rückschlagventile (23, 27), eine einen Gasversorger (21) steuernde Druckanzeigeeinrichtung (26) und gegebenenfalls eine dem Druckminderer (24) zugeordnete Rückgewinnungseinrichtung (28) vorgesehen sind.

12. Vorrichtung nach den Ansprüchen 9 bis 11, dadurch gekennzeichnet, daß der Druckbehälter (20) über eine Leitung an eine zur Form (10) führende Zuführleitung (16) angeschlossen ist, daß die Zuführleitung (16) mit der Rückführleitung (15) über eine Zwischenleitung (18) verbunden ist, in der ein Gasverdichter (19) vorgesehen ist, und daß der Gasversorger (21) in Strömungsrichtung des Gases vor dem Gasverdichter (19) an die Zwischenleitung (18) angeschlossen ist.

13. Vorrichtung nach den Ansprüchen 9 bis 12, dadurch gekennzeichnet, daß in der Zuführleitung (16) ein Druckstufenregler (17) vorgesehen ist.

14. Vorrichtung nach den Ansprüchen 9 bis 13, dadurch gekennzeichnet, daß der Zwischenkanal (29) an der Abströmseite des Gases durch einen Schieber (30) o. dgl. verschließbar ist, der nach Beendigung der Schmelzezufuhr in die Form geöffnet wird.

15. Vorrichtung nach Anspruch 14, dadurch gekennzeichnet, daß der Schieber (30) in Abhängigkeit von dem Gasdruck in der Form steuerbar ist.

## Claims

1. A process for manufacturing hollow injection-moulded plastic mouldings (11), in which a predetermined amount of a molten plastic mass is injected into the cavity (11a) of a multi-part closed mould (10) and in which the subsequent shaping of the melt to form the moulding (11) is effected by means of a gas under pressure, wherein the gas is injected into the molten plastic mass after introducing the molten plastic mass into the cavity of the two-part mould (10), characterised in that the gas flows into an overflow well (13) on overcoming the wall of the moulding (11) and thence reaches a gas circulation system in such a way that during the shaping of the molten mass the gas continuously flows through the hollow space of the moulding (11) being formed until solidification of the moulding (11) has occurred.

2. A process according to claim 1, characterised in that the gas flow is produced by a pressure drop between the inflow side and the outflow side of the gas into the mould (10) and out of the mould (10), respectively.

3. A process according to claim 2, characterised in that the differential pressure of the gas between the inflow side and the outflow side is calculated so that sufficient internal pressure is maintained for the shaping of the moulding (11) during the flow of gas.

4. A process according to claims 1 to 3, characterised in that the differential pressure between the inflow side and the outflow side is about 2:1.

5. A process according to claims 1 to 4, characterised in that the molten plastic mass injected into the cavity of the mould (10) before the introduction of the gas amounts to between 50 % and 100 % of the volumetric capacity of the cavity of the mould (10).

6. A process according to claims 1 to 5, characterised in that the gas stream breaks through the wall of the molten mass after the molten mass has entered the overflow well (13) as a result of the overpressure prevailing in the hollow space (11a) of the moulding.

7. A process according to claim 6, characterised in that the gas stream flows through an intermediate channel (29) of substantially smaller cross-section than that of the overflow well before flowing into the overflow well (13).

8. A process according to claims 1 to 7, characterised in that the overflow well (13) is maintained imperviously sealed against the atmosphere during the circulation of the gas.

9. A device for carrying out the process according to claim 1, with a multi-part mould (10), a molten mass feed (12'), and an injection nozzle (12) for introducing gas into a molten plastic mass, characterised by a mould (10) fitted with an overflow well (13) sealed against the atmosphere for the gas flowing out of the hollow space (11a) of the moulding, a compressor (19) for the gas, a pressure vessel (20) for the compressed gas and a pressure reducer (24) for the gas flowing out of the overflow well (13).

10. A device according to claim 9, characterised in that the overflow well (13) is connected to a return line (15) for the outflowing gas, and that at least the pressure reducer (24) and an attached storage vessel (25) for the decompressed gas are provided in the return line (15).

11. A device according to claims 9 to 10, characterised in that a filter (22), two check valves (23, 27), a pressure indicator device (26) controlling a gas supply (21), and optionally a recovery device (28) associated with the pressure reducer (24), are additionally provided in the return line (15).

12. A device according to claims 9 to 11, characterised in that the pressure vessel (20) is connected via a line to a feed line (16) leading to the mould (10), that the feed line (16) is connected to the return line (15) via an intermediate line (18) in which a gas compressor (19) is provided, and that the gas supply (21) is connected to the intermediate line (18) above the gas compressor (19) in the direction of flow of the gas.

13. A device according to claims 9 to 12, characterised in that a pressure stage controller (17) is provided in the feed line (16).

14. A device according to claims 9 to 13, characterised in that the intermediate channel (29) can be closed off on the gas outflow side by a slide valve (30) or the like, which is opened after the feeding of the molten mass into the mould has been completed.

15. A device according to claim 14, characterised in that the slide valve (30) can be controlled depending on the gas pressure in the mould.

## Revendications

1. Procédé de fabrication de corps creux (11) moulés par injection, en matière plastique, selon lequel une quantité prédéterminée de matière plastique fondue est injectée dans la cavité (11a) d'un moule (10) fermé et en plusieurs parties, et selon lequel la mise en forme qui suit, de la matière fondue, pour constituer le corps moulé (11), s'effectue au moyen d'un gaz se trouvant sous pression, le gaz étant injecté dans la matière plastique fondue après l'introduction de la matière plastique fondue dans la cavité du moule (10) en deux parties, caractérisé en ce qu'en traversant la paroi du corps moulé (11), le gaz s'écoule dans une chambre de trop-plein (13), et de là, parvient dans un système de circulation de gaz, de façon à ce qu'au cours de la mise en forme de la matière fondue, la cavité du corps moulé (11), qui se forme, soit continuellement traversée par le gaz en écoulement, jusqu'à la solidification du corps moulé (11).

2. Procédé selon la revendication 1, caractérisé en ce que l'écoulement du gaz est produit par une chute de pression entre le côté d'entrée du gaz dans le moule (10) et le côté de sortie du gaz du moule (10).

3. Procédé selon la revendication 2, caractérisé en ce que le rapport des pressions entre le côté d'entrée du gaz et le côté de sortie du gaz, prend une valeur permettant de maintenir une pression intérieure suffisante pour la mise en forme du corps moulé (11) au cours de l'écoulement du gaz.

4. Procédé selon les revendications 1 à 3, caractérisé en ce que la pression différentielle entre le côté d'entrée du gaz et le côté de sortie du gaz, vaut environ 2:1.

5. Procédé selon les revendications 1 à 4, caractérisé en ce que la quantité de matière plastique fondue injectée dans la cavité du moule (10) avant l'introduction du gaz, vaut environ 50% à 100% du volume que peut contenir la cavité du moule (10).

6. Procédé selon les revendications 1 à 5, caractérisé en ce que le courant de gaz transperce la paroi de matière fondue, après l'entrée de la matière fondue dans la chambre de trop-plein (13), en raison de la surpression régnant dans la cavité (11a) du corps moulé.

7. Procédé selon la revendication 6, caractérisé en ce que le courant de gaz, avant l'entrée dans la chambre de trop-plein (13), s'écoule au travers d'un canal intermédiaire (29) de section transversale sensiblement plus faible que celle de la chambre de trop-plein.

8. Procédé selon les revendications 1 à 7, caractérisé en ce que chambre de trop-plein (13) est maintenue fermée de manière étanche par rapport à l'atmosphère, au cours de la circulation du gaz.

9. Dispositif pour la mise en oeuvre du procédé selon la revendication 1, comportant un moule (10) en plusieurs parties, une alimentation en matière fondue (12') et une buse d'injection (12) pour l'introduction de gaz dans la matière fondue, caractérisé par un moule équipé d'une chambre de trop-plein (13) étanche par rapport à l'atmosphère et destinée au gaz s'écoulant hors de la cavité (11a) du corps moulé, un compresseur (19) pour le gaz, un réservoir sous pression (20) pour le gaz comprimé et un réducteur de pression (24) pour le gaz s'écoulant hors de la chambre de trop-plein (13).

10. Dispositif selon la revendication 9, caractérisé en ce que la chambre de trop-plein (13) est raccordée à une conduite de retour (15) pour le gaz qui s'échappe, et en ce que dans la conduite de retour (15) sont prévus au moins le réducteur de pression (24) et un réservoir d'accumulation (25) qui y est raccordé et qui est destiné au gaz détendu.

11. Dispositif selon les revendications 9 à 10, caractérisé en ce que sont prévus, en outre, dans la conduite de retour (15), un filtre (22), deux clapets anti-retour (23, 27), un dispositif d'indication de la pression (26) commandant une source d'alimentation en gaz (21), et, le cas échéant, un dispositif de récupération (28) associé au réducteur de pression (24).

12. Dispositif selon les revendications 9 à 11, caractérisé en ce que le réservoir sous pression (20) est raccordé, à l'aide d'une conduite, à une conduite d'alimentation (16) conduisant au moule (10), en ce que la conduite d'alimentation (16) est reliée à la conduite de retour (15) à l'aide d'une conduite intermédiaire (18) dans laquelle est prévu un compresseur à gaz (19), et en ce que la source d'alimentation en gaz (21) est raccordée à la conduite intermédiaire (18), en amont du compresseur à gaz (19) en considérant la direction d'écoulement du gaz.

13. Dispositif selon les revendications 9 à 12, caractérisé en ce que dans la conduite d'alimentation (16) est prévu un régulateur de paliers de pression (17).

14. Dispositif selon les revendications 9 à 13, caractérisé en ce que le canal intermédiaire (29) peut être obturé, sur le côté de sortie de l'écoulement de gaz, par une vanne (30) ou analogue, qui est ouverte après la fin de l'amenée de la matière fondue dans le moule.

15. Dispositif selon la revendication 14, caractérisé en ce que la vanne (30) peut être commandée en fonction de la pression du gaz dans le moule.
